Europäisches Patentamt

European Patent Office

Office européen des brevets

(11) Veröffentlichungsnummer: **0 274 730**

**A2**

## (12) EUROPÄISCHE PATENTANMELDUNG

(21) Anmeldenummer: 87119091.4

(22) Anmeldetag: 23.12.87

(51) Int. Cl.⁴: **A01K 11/00**

(30) Priorität: **13.01.87 DE 8700529 U**

(43) Veröffentlichungstag der Anmeldung:
**20.07.88 Patentblatt 88/29**

(84) Benannte Vertragsstaaten:
**BE DE ES FR NL**

(71) Anmelder: **Richard Herberholz KG
Höfen 82a
D-5600 Wuppertal 2(DE)**

(72) Erfinder: **Neutsch, Karl-Heinz
Laiken
D-5650 Solingen 1(DE)**

(74) Vertreter: **Buse, Karl Georg, Dipl.-Phys. et al
Patentanwälte Dipl.-Phys. Buse Dipl.-Phys.
Mentzel Dipl.-Ing. Ludewig Unterdörnen 114
D-5600 Wuppertal 2(DE)**

(54) **Ohrmarke zur Kennzeichnung von Tieren, insbesondere Schweinen.**

(57) Die Ohrmarke zur Kennzeichnung von Tieren, insbesondere Schweinen, besteht aus einem als Metall-Hohlniet ausgebildeten Unterteil und einem mit dem Unterteil vernietbaren, platten-oder - scheibenförmigen Oberteil. Zwischen Oberteil und Unterteil ist ein Markierungsträger aus biegsamen, zerreißfestem Kunststoff vorgesehen. Der Markierungsträger ist von einem Abschnitt eines Kunststoff-Bandes gebildet, das sich aus einer Vielzahl von Markierungsträgern zusammensetzt, die in Reihen durch perforierte Verbindungsbrücken miteinander vereinigt sind. In seiner Gebrauchslage überragt der Markierungsträger die Ränder der Bodenplatte des Unterteils verhältnismäßig weit. Das als Hohlniet ausgebildete Unterteil kann durch eine u-förmige oder v-förmige Brücke mit dem plattenförmigen Oberteil vereinigt sein.

FIG. 7

EP 0 274 730 A2

## Ohrmarke zur Kennzeichnung von Tieren, insbesondere Schweinen

Die Erfindung bezieht sich auf eine Ohrmarke zur Kennzeichnung von Tieren, insbesondere Schweinen, mit einem als Metall-Hohlniet ausgebildeten Unterteil und einem mit dem Unterteil vernietbaren, platten-oder scheibenförmigen Oberteil aus Metall. Solche Ohrmarken sind in vielen unterschiedlichen Ausführunsgformen bekannt. Vielfach dient bei bekannten Ohrmarken das Oberteil zur Aufnahme von Markierungen, die bei Metall-Ausführungsformen einzeln mit einem Schlagstempel eingeprägt werden müssen. Diese geschieht vor der Vernietung des Oberteils mit dem Metall-Hohlniet, der als Unterteil dient. Die mit den Markierungen versehenen Oberteile werden vor ihrer Verarbeitung gemeinsam an Draht-Ringen o.dgl. aufgehängt. Die Markierung der Oberteile und ihre nachträgliche Vernietung mit dem Hohlniet-Unterteil ist umständlich und zeitraubend. Um hier Abhilfe zu schaffen, sind bereits Ohrmarken aus Kunststoff geschaffen worden, deren Oberteile sich einfach bedrucken oder beschriften lassen. Diese Ausführungsformen haben nun wiederum den Nachteil, daß die Verbindung zwischen Oberteil und Unterteil nicht dauerhaft genug ist. Es gehen verhältnismäßig viele Ohrmarken während des Schlachtprozesses verloren, weil der aus Kunststoff gebildete Verschluß den Beanspruchungen während des Schlachtprozesses durch Brühen, Kratzen und Flammen nicht widersteht.

Der Erfindung liegt die Aufgabe zugrunde, bei Meidung der oben aufgezeigten Nachteile eine Ausführungsform zu schaffen, die die Vorteile der Metall-Ohrmarke und der Kunststoff-Ohrmarke in sich vereinigt. Zur Lösung dieser Aufgabe wird erfindungsgemäß vorgeschlagen, daß zwischen Oberteil und Unterteil ein Markierungsträger aus biegsamen und zerreißfestem Kunststoff vorgesehen ist. Diese Ausbildung hat den Vorteil, daß sich Oberteil und Unterteil der Ohrmarke dauerhaft miteinander vernieten läßt, während der Kunststoff-Markierungsträger sich einfach bedrucken oder beschriften läßt. Versuche haben ergeben, daß die erfindungsgemäßen Ohrmarken so dauerhaft ist Schweineohr sitzen, daß die so gekennzeichneten Schweine auch nach dem Schlachtprozeß noch einwandfrei zu identifizieren sind.

Bei einer bevorzugten Ausführungsform kann der Markierungsträger von einem Abschnitt eines Kunststoff-Bandes gebildet sein, das sich aus einer Vielzahl von Markierungsträgern zusammensetzt, die in Reihen durch perforierte Verbindungsbrücken miteinander vereinigt sind. Hierdurch wird erreicht, daß das Kunststoff-Band vor dem Gebrauch der Markierungsträger fortlaufend bedruckt oder beschriftet werden kann. Vor ihrer Verarbeitung sind die einzelnen Markierungsträger lediglich von dem Kunststoff-Band abzutrennen, was durch Abknicken der perforierten Verbindungsbrücken geschieht.

Nach einem weiteren Merkmal der Erfindung kann der Markierungsträger in seiner Gebrauchslage die Ränder der Bodenplatte des Unterteils verhältnismäßig weit überragen.

Die überstehenden Bereiche des aus biegsamen Kunststoff gefertigten Markierungsträger - schützen den scharfen Rand des Hohlniets (Unterteil) vor unbeabsichtigtem Hängenbleiben der Ohrmarke.

Das als Hohlniet ausgebildete Unterteil kann durch eine u-förmige oder v-förmige Brücke mit dem plattenförmigen Oberteil verbunden sein.

Auf der Zeichnung ist die Erfindung in einem Ausführungsbeispiel dargestellt. Es zeigen:

Fig. 1 den Kopf eines Schweines in - schaubildlicher Ansicht, dessen linkes Ohr mit einer erfindungsgemäßen Ohrmarke gekennzeichnet ist,

Fig. 2 ein aus aneinandergereihten Markierungsträgern bestehendes Kunststoff-Band,

Fig. 3 einen Hohlniet als Ohrmarken-Unterteil, teils im Schnitt,

Fig. 4 ein scheibenförmiges Oberteil, teils im Schnitt,

Fig. 5 ein plattenförmiges Oberteil in Draufsicht,

Fig. 6 einen Schnitt nach der Linie VI-VI der Fig. 5, und

Fig. 7 einen Längsschnitt durch eine Ohrmarke mit Markierungsträger, die in einem Schweineohr sitzt.

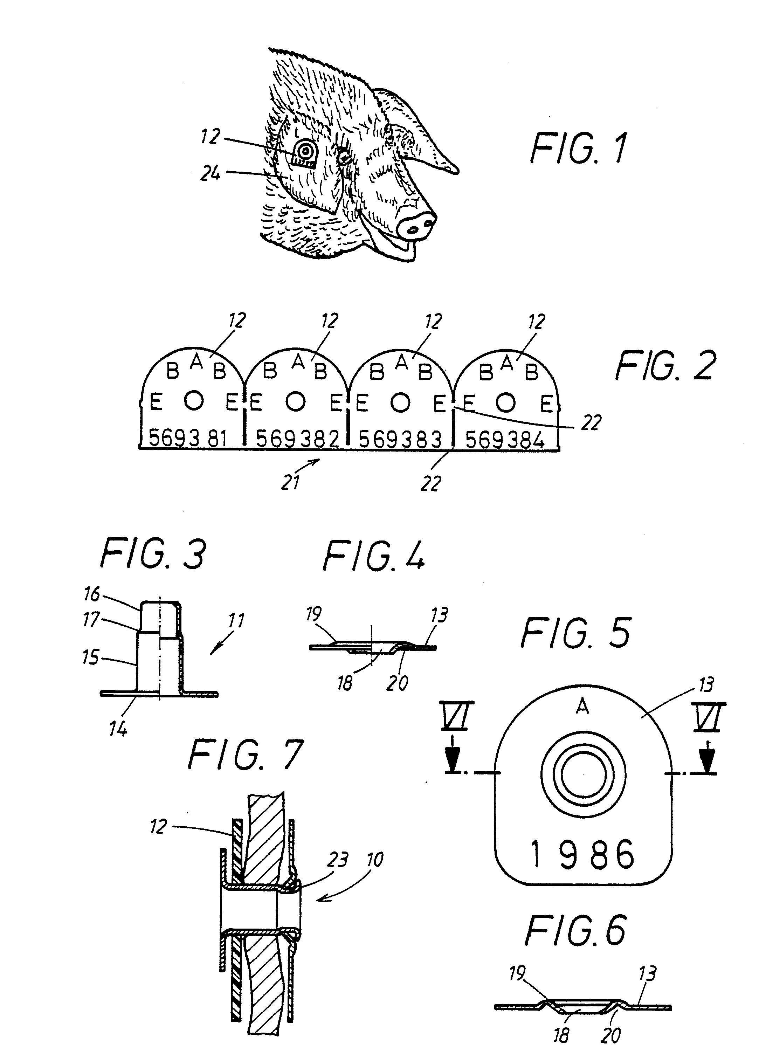

Die in den Figuren 3 - 7 gezeigten Teile sind vergrößert dargestellt.

Die dem Ausführungsbeispiel zugrunde liegende Ohrmarke 10 besteht aus einem Hohlniert aus Messing, der als Unterteil 11 dient, einem Markierungsträger 12 aus biegsamen, zerreißfesten Kunststoff und einem scheiben-oder plattenförmigen Oberteil 13, der ebenfalls aus Messing gefertigt ist. Das Unterteil 11 ist ein handelsüblicher Hohl niet mit einer runden Bodenplatte 14, aus welcher der hohle Schaft 15 herausragt, dessen oberer Bereich 16 stufenförmig abgesetzt ist, so daß eine ringförmige Auflagefläche 16 entsteht.

Das in der Fig. 4 gezeigte Oberteil 13 ist - scheibenförmig, während das in den Figuren 5 und 6 wiedergegebene Oberteil 13 eine torbogenförmige Form aufweist. Bei beiden Oberteilen 13 ist eine mittlere, trichterartige Öffnung 18 mit einem ringartigen Kragen 19 vorgesehen, der aus der Oberfläche der Oberteile 13 herausragt. Die Unterseite des Kragens 19 bildet eine Mulde 20.

Die Fig. 2 zeigt ein Kunststoff-Band 21, das sich aus einer Vielzahl aneinandergereihter Markierungsträger 12 zusammensetzt, die über perforierte Verbindungsbrücken 22 vereinigt sind. Die Markierungsträger 12 werden, wie die Fig. 2 veranschaulicht, fortlaufend bedruckt. Die einzelnen Markierungen geben genaue Auskunft (Geburt, Impfung, Mastbeginn, Mastende) über das betreffende Schwein. Die einzelnen Markierungsträger 12 lassen sich leicht von dem Kunststoff-Band 21 abtrennen, was durch Abknicken der Verbindungsbrücken 22 erfolgt.

Das Unterteil 11 wird unter Zwischenschaltung des Markierungsträgers 12 mit dem Oberteil 13 vernietet. Dieses geschieht mit Hilfe einer Einziehzange. Bei der Vernietung wird der obere Bereich 16 des Nietschaftes 15 umgebördelt, so daß ein Nietkopf 23 entsteht, der in der tichterförmigen Öffnung 18 des Oberteils 13 Aufnahme findet, wie es die Fig. 7 veranschaulicht. Der Markierungsträger 12 befindet sich, wie die Fig. 1 erkennen läßt, an der Außenseite des Schweineohres 24. In dieser Lage sind die Markierungen deutlich erkennbar.

Wie bereits erwähnt, ist die dargestellte Ausführungsform nur eine beispielsweise Verwirklichung der Erfindung. Diese ist nicht darauf beschränkt. Es sind noch mancherlei Abänderungen und Ausbildungen möglich. So könnten sich die Markierungsträger 12 auch auf einer Trägerfolie befinden und vor dem Gebrauch von dieser abgezogen werden. Der Markierungsträger 12 könnte anstelle von torbogenförmig auch kreisförmig, quadratisch, mehreckig oder oval geformt sein.

Der Markierungsträger 12 läßt sich auch mit anderen Ohrmarken gemeinsam verwenden, wobei die Lochstanzung des Markierungsträgers 12 dem Befestigungsglied der Ohrmarke angepaßt wird. Dadurch kann schnell und einfach eine zusätliche Kennzeichnung bewirkt werden, z.B. durch die Veterinärbehörde im Seuchenfall. Des weiteren kann der Markierungsträger 12 auch bei Rindern benutzt werden.

Alle in der Beschreibung erwähnten und/oder in der Zeichnung dargestellten neuen Merkmale sind erfindungswesentlich, auch wenn sie in den Ansprüchen nicht ausdrücklich beansprucht wurden.

**Bezugszeichenliste:**

10 Ohrmarke
11 Unterteil (Hohlniet)
12 Markierungsträger
13 Oberteil
14 Bodenplatte des Unterteils 11
15 Schaft des Unterteils 11
16 stufenförmig abgesetzter Bereich des Schaftes 15
17 ringförmige Auflagefläche
18 trichterförmige Öffnung im Oberteil 13
19 ringförmiger Kragen
20 Mulde
21 Kunststoff-Band
22 Verbindungsbrücke
23 Nietkopf
24 Schweineohr

**Ansprüche**

1.) Ohrmarke zur Kennzeichnung von Tieren, insbesondere Schweinen, mit einem als Metall-Hohlniet ausgebildeten Unterteil und einem mit dem Unterteil vernietbaren, platten-oder - scheibenförmigen Oberteil, **dadurch gekennzeichnet,** daß zwischen Oberteil (13) und Unterteil (11) ein Markierungsträger (12) aus biegsamen, zerreißfestem Kunststoff vorgesehen ist.

2.) Ohrmarke nach Anspruch 1, dadurch gekennzeichnet, daß der Markierungsträger (12) von einem Abschnitt eines Kunststoff-Bandes (21) gebildet ist, das sich aus einer Vielzahl von Markierungsträgern (12) zusammensetzt, die in Reihen durch perforierte Verbindungsbrücken (22) miteinander vereinigt sind.

3.) Ohrmarke nach Anspruch 1 und 2, dadurch gekennzeichnet, daß der Markierungsträger (12) in seiner Gebrauchslage die Ränder der Bodenplatte (14) des Unterteils (11) verhältnismäßig weit überragt.

4.) Ohrmarke nach Anspruche 1 - 3, dadurch gekennzeichnet, daß das als Hohlniet ausgebildete Unterteil (11) durch eine u-förmige oder v-förmige Brücke mit dem plattenförmigen Oberteil (13) vereinigt ist.

FIG. 1

FIG. 2

FIG. 3

FIG. 4

FIG. 5

FIG. 7

FIG. 6

Herberholz